# EUROPEAN PATENT SPECIFICATION

(11) **EP 3 200 505 B1**
(45) Date of publication and mention of the grant of the patent: **12.12.2018**
(21) Application number: 15854768.7
(22) Date of filing: 27.04.2015
(51) Int. Cl.: H04W 24/04, H04W 28/10, H04W 72/12

(54) **METHOD AND DEVICE FOR ESTIMATING UPLINK SERVICE WAITING DELAY**
VERFAHREN UND VORRICHTUNG ZUR SCHÄTZUNG DER UPLINK-SERVICE-WARTEVERZÖGERUNG
PROCÉDÉ ET DISPOSITIF POUR ESTIMER LE TEMPS D'ATTENTE DE SERVICE DE LIAISON MONTANTE

(30) Priority: 30.10.2014 CN 201410604136
(43) Date of publication of application: 02.08.2017
(73) Proprietor: ZTE Corporation, Shenzhen, Guangdong 518057 (CN)
(72) Inventor: XU, Qianqian, Shenzhen Guangdong 518057 (CN)
(74) Representative: AWA Sweden AB
(86) International application number: PCT/CN2015/077516
(87) International publication number: WO 2016/065876

(56) References cited:
- WO-A1-2010/107355
- CN-A- 1 954 521
- CN-A- 101 946 463
- CN-A- 102 160 405
- CN-A- 102 742 320
- US-A1- 2008 175 147
- US-A1- 2009 113 086
- US-A1- 2011 249 583

## Description

### Technical Field

This text relates to the field of mobile communication, in particular to a method and a device for estimating an uplink service waiting delay in the field of wireless communication.

### Background

In the current 3GPP (3rd Generation Partnership Project) protocols, services are divided into different types according to different attributes, and each type of services is represented by using a QCI (Qos Class Identifier) index. At present, the protocols give 9 types of QCI services, a PDB (Packet Delay Budget) is clearly specified for each type of QIC services to represent a maximum delay for transmission of a packet between a handheld terminal (UE) and a core network, and the protocols clearly specify that 98% of data packets of any service should satisfy the delay requirement. Therefore, in order to guarantee the validity of packets, this value is one of important consideration parameters of base station schedulers.

The delay requirements for packets of an uplink service and a downlink service are the same, the packet of the downlink service is transmitted from the core network to UE through a base station, the packet of the uplink service is transmitted from UE to the core network through a base station, the base station cannot control a process of transmission of a service packet between the base station and the core network and the base station can only control a process of transmission of a packet between the base station and UE. As a result, the protocols clearly specify that a delay of transmission of a packet between a base station and a core network is 20ms, and thereby a delay of transmission of a packet between a base station and UE is reduced to (PDB-20)ms.

When a packet of the downlink service arrives at a base station user plane, a timestamp can be added, thereby the base station can acquire a waiting delay of the packet at the base station when the packet is scheduled, and then a suitable scheduling policy is selected in consideration of a PDB requirement of this service so as to satisfy the PDB requirement of the service packet as much as possible. However, for the uplink service, the base station does not clearly know the time at which the packet arrives at a user plane of UE and does not clearly know the waiting delay of the packet in the user plane of UE. At present, UE only reports a size of data to be scheduled in the user plane. However, the current protocols do not define about reporting a waiting delay of an uplink packet. As a result, the base station cannot acquire information about a waiting delay of an uplink packet and cannot consider the PDB requirement of the uplink packet during scheduling.

WO 2010/107355 A1 discloses active queue management for a wireless communication network uplink.

US 2011/249583 A1 discloses a method and apparatus for estimating a delay of buffer data of a User Equipment (UE) in a mobile communication system.

### Summary

The embodiments of the present invention provide a method and a device for estimating an uplink service waiting delay in a mobile communication network, so as to estimate the uplink service waiting delay by using the existing uplink reported information and thereby overcome the defect that a base station cannot acquire the uplink service waiting delay

The invention is set out in the appended set of claims.

In order to solve the above-mentioned problem, the embodiment of the present invention provides a method for estimating an uplink service waiting delay in accordance with claim 1, the method includes:
a base station comparing a Buffer Status Report (BSR) reported by UE with a maintained BSR of the UE and determining a valid BSR; wherein the base station comparing the BSR reported by the UE with the maintained BSR of the UE and determining the valid BSR includes: the base station comparing the BSR reported by the UE this time with a sum of the maintained BSRs of the UE; if the BSR reported this time is less than or equal to the sum of the BSRs, determining that the BSR reported this time is invalid; and if the BSR reported this time is greater than the sum of the BSRs, determining that the BSR reported this time is valid, and determining the valid BSR to be equal to the BSR reported this time minus the sum of the maintained BSRs of the UE;
when the BSR reported by the UE contains a timestamp, the base station updating the maintained BSR of the UE according to the valid BSR and the timestamp; and when the BSR reported by the UE does not contain a timestamp, adding a timestamp for the valid BSR, and updating the maintained BSR of the UE according to the valid BSR and the added timestamp; and
when the UE is scheduled, the base station calculating a service waiting delay according to a timestamp of the maintained BSR of the UE.

In an exemplary embodiment, the method further includes:
after the UE is scheduled, the base station updating the maintained BSR of the UE, including: modifying a size of a scheduled BSR, updating a sum of the maintained BSRs and removing a BSR which has already been scheduled.

In an exemplary embodiment, calculating the service waiting delay according to the timestamp of the maintained BSR of the UE includes:
when the BSR reported by the UE contains a timestamp, the base station calculating the service waiting delay to be an interval between a moment at which the UE is scheduled and an earliest moment represented by the timestamp in the maintained BSR of the UE; and
when the BSR reported by the UE does not contain a timestamp, the base station calculating the service waiting delay to be the interval between the moment at which the UE is scheduled and the earliest moment represented by the timestamp in the maintained BSR of the UE plus a delay estimate between a moment at which a predetermined service arrives at a buffer of the UE and a moment at which the UE reports the BSR.

In an exemplary embodiment, the delay estimate between the moment at which the predetermined service arrives at the buffer of the UE and the moment at which the UE reports the BSR is that:
the delay estimate is 0 in case of continuous scheduling; and
the delay estimate is a numerical value which is randomly generated within a closed interval [1, a scheduling request cycle] in case of non-continuous scheduling.

The embodiment of the present invention further provides a device for estimating an uplink service waiting delay provided in a base station in accordance with claim 5. The device includes:
a comparison module configured to compare a Buffer Status Report BSR reported by UE with a maintained BSR of the UE and determine a valid BSR; wherein the comparison module is further configured to: compare the BSR reported by the UE this time with a sum of the maintained BSRs of the UE; if the BSR reported this time is less than or equal to the sum of the BSR, determine that the BSR reported this time is invalid; and if the BSR reported this time is greater than the sum of the BSRs, determine that the BSR reported this time is valid and determine the valid BSR to be equal to the BSR reported this time minus the sum of the maintained BSRs of the UE; a maintenance module configured to, when the BSR reported by the UE contains a timestamp, update the maintained BSR of the UE according to the valid BSR and the timestamp; and when the BSR reported by the UE does not contain a timestamp, add a timestamp for the valid BSR, and update the maintained BSR of the UE according to the valid BSR and the added timestamp; and
a calculation module configured to, when the UE is scheduled by the base station, calculate a service waiting delay according to a timestamp of the maintained BSR of the UE.

In an exemplary embodiment, the calculation module is further configured to, after the UE is scheduled by the base station, update the maintained BSR of the UE, including: modifying a size of a scheduled BSR, updating a sum of the maintained BSRs and remove a BSR which has already been scheduled.

In an exemplary embodiment, the calculation module is configured to:
when the BSR reported by the UE contains a timestamp, calculate the service waiting delay to be an interval between a moment at which the UE is scheduled and an earliest moment represented by the timestamp in the maintained BSR of the UE; and when the BSR reported by the UE does not contain a timestamp, calculate the service waiting delay to be the interval between the moment at which the UE is scheduled and the earliest moment represented by the timestamp in the maintained BSR of the UE plus a delay estimate between a moment at which a predetermined service arrives at a buffer of the UE and a moment at which the UE reports the BSR.

In an exemplary embodiment, the delay estimate between the moment at which the predetermined service arrives at the buffer of the UE and the moment at which the UE reports the BSR is that:
the delay estimate is 0 in case of continuous scheduling; and
the delay estimate is a numerical value which is randomly generated within a closed interval [1, a scheduling request cycle] in case of non-continuous scheduling.

The embodiment of the present invention further provides a computer-readable storage medium storing a computer program, the computer program includes program instructions, which, when executed by a base station apparatus, enable the apparatus to execute the above mentioned method for estimating the uplink service waiting delay.

The embodiments of the present invention can achieve the following beneficial effects: the defect that the base station cannot directly acquire the uplink service waiting delay is overcome, an uplink scheduling delay reference is provided for a base station scheduler and the PDB delay requirement of an uplink service packet is satisfied to the utmost extent.

### Brief Description of Drawings

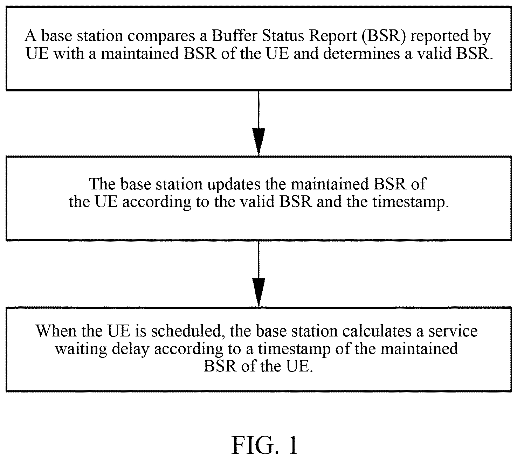

FIG. 1 illustrates a flowchart of a method for estimating an uplink service waiting delay according to an embodiment of the present invention.
FIG. 2 illustrates a flowchart of an exemplary embodiment of the present invention.

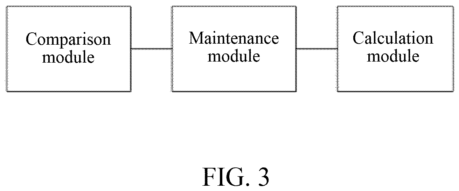

FIG. 3 illustrates a structural diagram of a device for estimating an uplink service waiting delay according to an embodiment of the present invention.

### Detailed Description

The technical solutions of the embodiments of the present invention will be described below in more detail with reference to the drawings in combination with the embodiments.

It needs to be stated that the embodiments of the present invention and the features in the embodiments may be mutually combined under the situation of no conflict, and all combinations shall be still included in the protection scope of the present invention. In addition, although a logic sequence is illustrated in the flowchart, under certain circumstances, the illustrated or described steps may be executed according to a sequence different from the sequence described here.

An embodiment of the present invention discloses a method for estimating an uplink service waiting delay, including the following steps:
a base station compares a Buffer Status Report (BSR) reported by UE with a maintained BSR of the UE, and determines a valid BSR; when the BSR reported by the UE contains a timestamp, the base station updates the maintained BSR of the UE according to the valid BSR and the timestamp; and when the BSR reported by the UE does not contain a timestamp, the base station adds a timestamp for the valid BSR, and updates the maintained BSR of the UE according to the valid BSR and the added timestamp; and when the UE is scheduled, the base station calculates a service waiting delay according to a timestamp of the maintained BSR of the UE.

Herein, that the base station compares the BSR reported by the UE with the maintained BSR of the UE, and determines the valid BSR specifically may include:
the base station compares the BSR reported by the UE this time with a sum of the maintained BSRs of the UE; if the BSR reported this time is less than or equal to the sum of the BSRs, determines that the BSR reported this time is invalid; and if the BSR reported this time is greater than the sum of the BSRs, determines that the BSR reported this time is valid and determines the valid BSR to be equal to the BSR reported this time minus the sum of the maintained BSRs of the UE.

Herein, the sum of the maintained BSRs of the UE is a sum of all BSRs, which are maintained by the base station and have not been scheduled, of the UE, and is also called below as a sum of historically maintained BSRs. If a newly reported BSR is less than or equal to the sum of the historically maintained BSRs, it represents that no new data are generated on the buffer of the UE, the BSR reported this time is invalid and the newly reported BSR may be ignored; and if the reported BSR is greater than the sum of the historically maintained BSRs, it represents that new data are generated on the buffer of the UE and the BSR reported this time is valid.

The method may further include:
after the UE is scheduled, the base station updates the maintained BSR of the UE, including: modifying a size of a scheduled BSR, updating a sum of the maintained BSRs and removing the BSR which has already been scheduled.

Herein, if multiple BSR containing timestamps are simultaneously scheduled, the maximum delay is used as the service waiting delay for the scheduling of this time. Calculating the service waiting delay according to the timestamp of the maintained BSR of the UE specifically may include:
when the BSR reported by the UE contains a timestamp, the base station calculates the service waiting delay to be an interval between a moment at which the UE is scheduled and an earliest moment represented by the timestamp in the maintained BSR of the UE; and when the BSR reported by the UE does not contain a timestamp, the base station calculates the service waiting delay to be the interval between the moment at which the UE is scheduled and the earliest moment represented by the timestamp in the maintained BSR of the UE plus a delay estimate between a moment at which a predetermined service arrives at a buffer of the UE and a moment at which the UE reports the BSR.

At present, the uplink reported BSRs of an LTE system are respectively reported according to logical channel groups. The above-mentioned service waiting delay may be respectively maintained and calculated according to logical channel groups.

The base station cannot acquire a delay between a moment at which a service arrives at the buffer of the UE and a moment at which the UE reports the BSR, but may estimate the delay according to service scheduling situations as follows: in case of continuous scheduling, the delay may be ignored and the delay estimate may be 0 since the BSR is reported with scheduling once uplink data arrive at the buffer; and in case of non-continuous scheduling, a numerical value may be randomly generated within an interval [1, a Scheduling Request cycle] according to the SR cycle and is used as the delay estimate.

In consideration of the storage space of the base station, if the requirement on uplink service delay is not strict, an upper limit of the number of BSR groups which are maintained by a base station may be specified; and when the number is greater than the upper limit, the subsequent delay is not accurately maintained any longer unless the previous BSR has already been scheduled.

The embodiment of the present invention includes two parts, i.e., the UE reports a packet timestamp and the base station estimates a service packet delay. When the BSR reported by the UE to the base station contains a packet timestamp, the service waiting delay when the base station schedules the UE is estimated according to the timestamp; and when the BSR reported by the UE to the base station does not contain a packet timestamp, the service waiting delay when the base station schedules the UE is estimated according to a delay estimate between a moment at which a service arrives at a buffer of the UE and a moment at which the UE reports the BSR and the time at which a message arrives at the base station. The base station may calculate remaining time for service timeout scheduling in combination with the PDB requirement of the service, the remaining time of all services may be balanced according to this parameter and thereby a suitable scheduling policy can be selected to satisfy the PDB delay requirement of all services to the utmost extent.

The embodiment of the present invention specifically uses the following technical solution.

At a preparation stage, firstly whether a BSR reported by UE contains a packet timestamp is determined.

If the BSR reported by the UE does not contains a packet timestamp, an upper limit of the number of BSR groups which are maintained by a base station and a delay estimate between a moment at which a service arrives at a buffer of the UE and a moment at which the UE reports the BSR are determined.

In addition, the reported BSRs may be classified according to service attributes, and maintenance, comparison and updating are performed always according to corresponding classification.

At an interaction state, if the BSR reported by the UE contains a packet timestamp, a valid BSR is determined according to sizes of BSRs which are maintained by the base station currently and historically for the same type of services of the same UE, and the valid BSR and a timestamp thereof are saved; and if the BSR reported by the UE does not contain a packet timestamp, a valid BSR is determined according to sizes of BSRs which are currently and historically maintained by the base station for the same type of services of the same UE and the number of BSR groups which are maintained, and a timestamp is added for the valid BSR and then the valid BSR and the timestamp are saved.

At a scheduling moment, the base station estimates an uplink service waiting delay according to the saved timestamp, calculates remaining time for this service timeout scheduling in combination with the PDB requirement of this service, balances remaining time of all services and selects a suitable scheduling strategy.

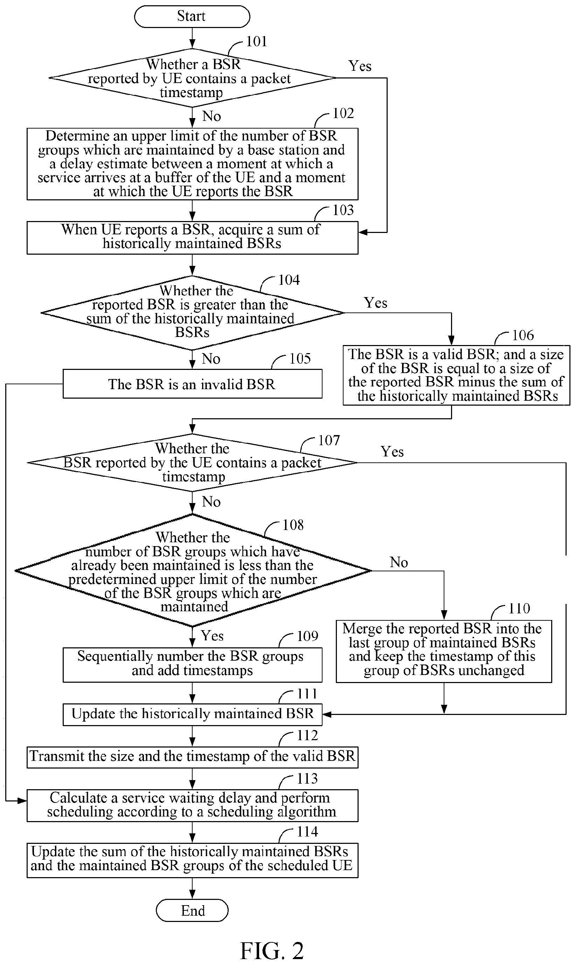

A specific exemplary embodiment is as illustrated in FIG. 2 and the method includes steps 101-114.

In step 101, at a preparation stage, whether a BSR reported by UE contains a packet timestamp is judged; if yes, step 103 is performed; and if not, step 102 is performed.

In step 102, an upper limit of the number of BSR groups which are maintained by a base station and a delay estimate between a moment at which a service arrives at a buffer of the UE and a moment at which the UE reports the BSR are determined; and step 103 is performed.

In step 103, at an interaction stage, when the UE reports the BSR, a sum of historically maintained BSRs is acquired; and step 104 is performed.

In step 104, whether the reported BSR is greater than the sum of the historically maintained BSRs is judged; if yes, step 106 is performed; and if not, step 105 is performed.

In step 105, the BSR reported by the UE is considered as an invalid BSR; and step 113 is performed.

In step 106, the BSR reported by the UE is considered as a valid BSR; a size of the BSR is allowed to be equal to a size of the reported BSR minus the sum of the historically maintained BSRs; and step 107 is performed.

In step 107, whether the BSR reported by the UE contains a packet timestamp is judged; if yes, step 111 is performed; and if not, step 108 is performed.

In step 108, whether the number of BSR groups which have already been maintained is less than the predetermined upper limit of the number of the BSR groups which are maintained is judged; if yes, step 109 is performed; and if not, step 110 is performed.

In step 109, the BSR groups are sequentially numbered and timestamps are added; and step 111 is performed.

In step 110, the reported BSR is merged into the last group of maintained BSRs and the timestamp of this group of BSRs is not changed; and step 111 is performed.

In step 111, the historically maintained BSR is updated; and step 112 is performed.

In step 112, the size and the timestamp of the valid BSR are saved; and step 113 is performed.

In step 113, when the UE is scheduled, the base station calculates a service waiting delay and performs scheduling according to a scheduling algorithm; and step 114 is performed.

In step 114, the sum of the historically maintained BSRs and the maintained BSR groups of the scheduled UE are updated.

The embodiment of the present invention discloses a device for estimating an uplink service waiting delay arranged in a base station. The device includes a processor and a program storage unit, and further includes:
a comparison module adapted to compare a Buffer Status Report (BSR) reported by UE with a maintained BSR of the UE and determine a valid BSR;
a maintenance module adapted to, when the BSR reported by the UE contains a timestamp, update the maintained BSR of the UE according to the valid BSR and the timestamp; and when the BSR reported by the UE does not contain a timestamp, add a timestamp for the valid BSR, and update the maintained BSR of the UE according to the valid BSR and the added timestamp; and
a calculation module adapted to, when the UE is scheduled by the base station, calculate a service waiting delay according to a timestamp of the maintained BSR of the UE.

Herein, that the comparison module compares the BSR reported by the UE with the maintained BSR of the UE and determines the valid BSR specifically may refer to that:
the comparison module compares the BSR reported by the UE this time with a sum of the maintained BSRs of the UE; if the BSR reported this time is less than or equal to the sum of the BSRs, determines that the BSR reported this time is invalid; and if the BSR reported this time is greater than the sum of the BSRs, determines that the BSR reported this time is valid and determines the valid BSR to be equal to the BSR reported this time minus the sum of the maintained BSRs of the UE.

Herein, the calculation module is further used for, after the UE is scheduled by the base station, updating the maintained BSR of the UE, including: modifying a size of a scheduled BSR, updating a sum of the maintained BSRs and removing a BSR which has already been scheduled.

Herein, that the calculation module calculates the service waiting delay according to the timestamp of the maintained BSR of the UE specifically may refer to that:
the calculation module, when the BSR reported by the UE contains a timestamp, calculates the service waiting delay which is equal to an interval between a moment at which the UE is scheduled and an earliest moment represented by the timestamp in the maintained BSR of the UE; and when the BSR reported by the UE does not contain a timestamp, calculates the service waiting delay to be the interval between the moment at which the UE is scheduled and the earliest moment represented by the timestamp in the maintained BSR of the UE plus a delay estimate between a moment at which a predetermined service arrives at a buffer of the UE and a moment at which the UE reports the BSR.

Herein, the delay estimate between the moment at which the predetermined service arrives at the buffer of the UE and the moment at which the UE reports the BSR specifically may be:
the delay estimate is 0 in case of continuous scheduling; and
the delay estimate is a numerical value which is randomly generated within a closed interval [1, a scheduling request cycle] in case of non-continuous scheduling.

Description will be made below through specific exemplary embodiments.

Embodiment one: steps 201-215 are included.

In step 201, it is determined that a BSR reported by UE contains a packet timestamp.

In step 202, UE1 with UE Index=10 initially accesses, a BSR reported at a moment t1_eNB is 1000bits and a carried timestamp is T1_UE. At this moment, a sum of historically maintained BSRs is 0, thus the newly reported BSR is valid, a base station maintains BSR1=1000bits and the sum of the BSRs historically maintained by the base station is updated to 1000bits.

In step 203, the base station schedules UE1 at a moment t2_eNB, and at this moment a service waiting delay is t2_eNB-T1_UE.

In step 205, the base station performs scheduling according a scheduling algorithm and the service waiting delay and schedules UE1 with 500bits.

In step 206, BSR1 is updated to 1000-500=500bits, the timestamp is T1-UE, and the sum of the BSRs historically maintained by the base station is updated to 500bits.

In step 207, a BSR reported by UE1 at a moment t3_eNB is 1000bits and a carried timestamp is T2 UE.

In step 208, the sum of the BSRs historically maintained by the base station is 500bits, the newly reported BSR is greater than the BSRs historically maintained by the base station, new data are generated on the UE, the newly reported BSR is a valid BSR, the base station maintains BSR2=1000-500=500bits, the timestamp is T2_UE, and the sum of the BSRs historically maintained by the base station is updated to 1000bits.

In step 209, a BSR reported by UE1 at a moment t4_eNB is 1000bits and a carried timestamp is T3 UE.

In step 210, the sum of the BSRs historically maintained by the base station is 1000bits, the newly reported BSR is equal to the BSRs historically maintained by the base station, no new data are generated on the UE, the newly reported BSR is an invalid BSR, and the newly reported BSR is ignored.

In step 211, the base station schedules UE1 at a moment t5_eNB, and at this moment the service waiting delay is t5_eNB-T1_UE and is calculated according to the maximum time.

In step 212, a scheduling module performs scheduling according the scheduling algorithm and the service waiting delay and schedules UE1 with 800bits.

In step 213, the BSR group of UE1 maintained by the base station is updated to BSR1=500bits, 800bits are scheduled and are greater than BSR1, and BSR1 scheduling is completed; BSR2 remains 500-(800-500) =200bits, and the timestamp is T2_UE; and the sum of the BSRs historically maintained by the base station is updated to 200bits.

In step 214, the number of BSR groups is updated, BSR1 scheduling is completed, BSR2 is updated to BSR1 and so on subsequently.

In step 215, if UE1 reports a new BSR, steps 207 and 208 are repeated (when the BSR is valid) or steps 209 and 210 are repeated (when the BSR is invalid); and if the base station schedules the UE, steps 211-214 are repeated.

### Embodiment two:

In step 301, it is determined that a BSR reported by UE does not contain a packet timestamp, it is determined that an upper limit of the number of BSR groups maintained by a base station is infinitely great and it is determined that a delay between a moment at which a service arrives at a buffer of the UE and a moment at which the UE reports the BSR is 0.

In step 302, UE1 with UE Index=10 initially accesses and a BSR reported at a moment T1 is 1000bits. At this moment, a sum of historically maintained BSRs is 0, thus the newly reported BSR is valid and a base station maintains BSR1=1000bits; and it is determined that the number does not exceed the upper limit of the number of the maintained BSR groups.

In step 303, a timestamp T1 is added to BSR1 and the sum of the BSRs historically maintained by the base station is updated to 1000bits.

In step 304, the base station schedules UE1 at a moment T2 and at this moment the service waiting delay is T2-T1.

In step 305, the base station performs scheduling according a scheduling algorithm and the service waiting delay and schedules UE1 with 500bits.

In step 306, BSR1 is updated to 1000-500=500bits, the timestamp is T1, and the sum of the BSRs historically maintained by the base station is updated to 500bits.

In step 307, a BSR reported by UE1 at a moment T3 is 500bits.

In step 308, the sum of the BSRs historically maintained by the base station is 500bits, the newly reported BSR is equal to the BSRs historically maintained by the base station, no new data are generated on the UE, the newly reported BSR is an invalid BSR, and the newly reported BSR is ignored.

In step 309, a BSR reported by UE1 at a moment T4 is 1000bits.

In step 310, the sum of the BSRs historically maintained by the base station is 500bits, the newly reported BSR is greater than the BSRs historically maintained by the base station, new data are generated on the UE, the newly reported BSR is a valid BSR, and the base station maintains BSR3=1000-500=500bits; and it is determined that the number does not exceed the upper limit of the number of the maintained BSR groups, a timestamp T4 is added to BSR3, and the sum of the BSRs historically maintained by the base station is updated to 1000bits.

In step 311, a BSR reported by UE1 at a moment T5 is 2000bits.

In step 312, the sum of the BSRs historically maintained by the base station is 1000bits, the newly reported BSR is greater than the BSRs historically maintained by the base station, new data are generated on the UE, the newly reported BSR is a valid BSR, and the base station maintains BSR4=2000-1000=1000bits; and it is determined that the number does not exceed the upper limit of the number of the maintained BSR groups, a timestamp T5 is added to BSR4, and the sum of the BSRs historically maintained by the base station is updated to 2000bits.

In step 313, the base station schedules UE1 at a moment T6, and at this moment the service waiting delay is T6-T1 and is calculated according to the maximum time.

In step 314, the base station performs scheduling according the scheduling algorithm and the service waiting delay and schedules UE1 with 800bits.

In step 315, the BSR group of UE1 maintained by the base station is updated to BSR1=500bits, 800bits are scheduled and are greater than BSR1, and BSR1 scheduling is completed; BSR3 remains 500-(800-500) =200bits, and the timestamp is T4; BSR4=1000bits and the timestamp is T5; and the sum of the BSRs historically maintained by the base station is updated to 1200bits.

In step 316, the number of BSR groups is updated, BSR1 scheduling is completed, BSR2 is updated to BSR1, BSR3 is updated to BSR2 and so on subsequently.

In step 317, if a new BSR is reported, steps 309/311 and steps 310/3012 are repeated (when the BSR is valid) or steps 307 and 308 are repeated (when the BSR is invalid); and if the base station schedules the UE, steps 313-316 are repeated.

### Embodiment three:

In step 401, it is determined that a BSR reported by UE does not contain a packet timestamp, it is determined that an upper limit of the number of BSR groups maintained by a base station is 2 and it is determined that a delay between a moment at which a service arrives at a buffer of the UE and a moment at which the UE reports the BSR is 0.

In step 402, UE1 with UE Index=10 initially accesses and a BSR reported at a moment T1 is 1000bits. At this moment, a sum of historically maintained BSRs is 0, thus the newly reported BSR is valid and a base station maintains BSR1=1000bits; and it is determined that the number does not exceed the upper limit of the number of the maintained BSR groups.

In step 403, a timestamp T1 is added to BSR1 and the sum of the BSRs historically maintained by the base station is updated to 1000bits.

In step 404, a BSR reported by UE1 at a moment T2 is 1500bits.

In step 405, the sum of the BSRs historically maintained by the base station is 1000bits, the newly reported BSR is greater than the BSRs historically maintained by the base station, new data are generated on the UE, the newly reported BSR is a valid BSR, and the size of the newly data is 1500-1000=500bits.

In step 406, whether the number of BSR groups satisfies the requirement is judged: currently the base station only has one BSR group and the number is less than the upper limit 2 of the number of the BSR groups maintained by the base station, the base station maintains BSR2=500bits, a timestamp T2 is added for BSR2 and the sum of the BSRs historically maintained by the base station is updated to 1500bits.

In step 407, a BSR reported by UE1 at a moment T3 is 2000bits.

In step 408, the sum of the BSRs historically maintained by the base station is 1500bits, the newly reported BSR is greater than the BSRs historically maintained by the base station, new data are generated on the UE, the newly reported BSR is a valid BSR, and the size of the newly reported BSR data is 2000-1500=500bits.

In step 409, whether the number of BSR groups satisfies the requirement is judged: currently the base station has two BSR groups and the number reaches the upper limit 2 of the number of the BSR groups maintained by the base station, BSR2 is updated to 500+500=1000bits, the timestamp is T2, the report time T3 of 500bits of the newly reported BSR is ignored and the sum of the BSRs historically maintained by the base station is updated to 2000bits.

In step 410, the base station schedules UE1 at a moment T4, and at this moment the service waiting delay is T4-T1 and is calculated according to the maximum time.

In step 411, the base station performs scheduling according to a scheduling algorithm and the service waiting delay and schedules UE1 with 1500bits.

In step 412, the BSR group of UE1 maintained by the base station is updated to BSR1=1000bits, 1500bits are scheduled and are greater than BSR1, and BSR1 scheduling is completed; BSR2 remains 1000-(1500-1000) =500bits, and the timestamp is T2; and the sum of the BSRs historically maintained by the base station is updated to 500bits.

In step 413, the number of the BSR groups is updated, BSR1 scheduling is completed, BSR2 is updated to BSR1 and BSR2 is vacant.

In step 414, if a new BSR is reported and the newly reported BSR is valid, steps 407-409 are repeated (when the umber of the maintained groups is not less than the upper limit) or steps 404-406 are repeated (when the number of the maintained groups is less than the upper limit); if a new BSR is reported and the newly reported BSR is invalid, the newly reported BSR is ignored; and if the base station schedules the UE, steps 410-413 are repeated.

### Embodiment four:

In step 501, it is determined that a BSR reported by UE does not contain a packet timestamp, it is determined that an upper limit of the number of BSR groups maintained by a base station is infinitely great and it is determined that a delay between a moment at which a service arrives at a buffer of the UE and a moment at which the UE reports the BSR is a random number within [1, 5] ms.

In step 502, UE1 with UE Index=10 initially accesses and a BSR reported at a moment T1 is 1000bits. At this moment, a sum of historically maintained BSRs is 0, thus the newly reported BSR is valid and a base station maintains BSR1=1000bits; and it is determined that the number does not exceed the upper limit of the number of the maintained BSR groups.

In step 503, a timestamp T1 is added to BSR1 and the sum of the BSRs historically maintained by the base station is updated to 1000bits.

In step 504, the base station schedules UE1 at a moment T2, a delay between the moment at which the service arrives at the buffer of UE and the moment at which the UE reports the BSR is randomly generated as 2, and at this moment the service waiting delay is T2-T1+2 (unit: ms).

In step 505, the base station performs scheduling according a scheduling algorithm and the service waiting delay and schedules UE1 with 500bits.

In step 506, BSR1 is updated to 1000-500=500bits, the timestamp is T1, and the sum of the BSRs historically maintained by the base station is updated to 500bits.

In step 507, a BSR reported by UE1 at a moment T3 is 500bits.

In step 508, the sum of the BSRs historically maintained by the base station is 500bits, the newly reported BSR is equal to the BSRs historically maintained by the base station, no new data are generated on the UE, and the newly reported BSR is ignored.

In step 509, a BSR reported by UE1 at a moment T4 is 1000bits.

In step 510, the sum of the BSRs historically maintained by the base station is 500bits, the newly reported BSR is greater than the BSRs historically maintained by the base station, new data are generated on the UE, the newly reported BSR is a valid BSR, and the base station maintains BSR2=1000-500=500bits; and it is determined that the number does not exceed the upper limit of the number of the maintained BSR groups, a timestamp T4 is added to BSR2, and the sum of the BSRs historically maintained by the base station is updated to 1000bits.

In step 511, the base station schedules UE1 at a moment T5, a delay between the moment at which the service arrives at the buffer of UE and the moment at which the UE reports the BSR is randomly generated as 3, and at this moment the service waiting delay is T5-T1+3 and is calculated according to the maximum time.

In step 512, the base station performs scheduling according the scheduling algorithm and the service waiting delay and schedules UE1 with 800bits.

In step 513, the BSR group of UE1 maintained by the base station is updated to BSR1=500bits, 800bits are scheduled and are greater than BSR1, and BSR1 scheduling is completed; BSR2 remains 500-(800-500) =200bits, and the timestamp is T4; and the sum of the BSRs historically maintained by the base station is updated to 200bits.

In step 514, the number of BSR groups is updated, BSR1 scheduling is completed, BSR2 is updated to BSR1, BSR3 is updated to BSR2if BSR3 exists, and so on subsequently.

In step 515, if a new BSR is reported, steps 509 and 510 are repeated (when the BSR is valid) or steps 507 and 508 are repeated (when the BSR is invalid); and if the base station schedules the UE, steps 511-514 are repeated.

One skilled in the art can understand that all or partial steps in the above-mentioned method may be completed by relevant hardware instructed by a program, and the program may be stored in a computer-readable storage medium such as a read-only memory, a magnetic disc or a compact disc. Alternatively, all or partial steps in the above-mentioned embodiments may also be implemented by using one or more integrated circuits. Correspondingly, each module/unit in the above-mentioned embodiments may be implemented by means of hardware and may also be implemented by means of a software function module. The present invention is not limited to any specific form of combinations of hardware and software.

The invention and its embodiments are not limited to the examples described in this specification but may vary within the scope of the appended claims.

### Industrial Applicability

By using the method for estimating the uplink service waiting delay disclosed by the present invention, the uplink service waiting delay is estimated by using the existing uplink reported information, the defect that the base station cannot acquire the uplink service waiting delay is overcome, an uplink scheduling delay reference is provided for a base station scheduler and the PDB delay requirement of an uplink service packet is satisfied to the utmost extent.

## Claims

1. A method performed by a device provided in a base station, for estimating an uplink service waiting delay, **characterized by** comprising:
the base station comparing a Buffer Status Report, BSR, reported by a terminal UE with a maintained BSR of the UE and determining a valid BSR; wherein the base station comparing the BSR reported by the UE with the maintained BSR of the UE and determining the valid BSR comprises: the base station comparing the BSR reported by the UE this time with a sum of the maintained BSRs of the UE; when the BSR reported this time is less than or equal to the sum of the BSRs, determining that the BSR reported this time is invalid; and when the BSR reported this time is greater than the sum of the BSRs, determining that the BSR reported this time is valid, and determining the valid BSR to be equal to the BSR reported this time minus the sum of the maintained BSRs of the UE;
when the BSR reported by the UE contains a timestamp, the base station updating the maintained BSR of the UE to be the valid BSR according to the valid BSR and the timestamp; and when the BSR reported by the UE does not contain a timestamp, adding a timestamp for the valid BSR, and updating the maintained BSR of the UE to be the valid BSR according to the valid BSR and the added timestamp; and
when the UE is scheduled, the base station calculating a service waiting delay according to a timestamp of the maintained BSR of the UE.

2. The method according to claim 1, wherein the method further comprises:
after the UE is scheduled, the base station updating the maintained BSR of the UE, including: modifying a size of a scheduled BSR, updating a sum of the maintained BSRs and removing a BSR which has already been scheduled.

3. The method according to claim 1, wherein calculating the service waiting delay according to the timestamp of the maintained BSR of the UE comprises:
when the BSR reported by the UE contains a timestamp, the base station calculating the service waiting delay to be an interval between a moment at which the UE is scheduled and an earliest moment represented by the timestamp in the maintained BSR of the UE; and
when the BSR reported by the UE does not contain a timestamp, the base station calculating the service waiting delay to be the interval between the moment at which the UE is scheduled and the earliest moment represented by the timestamp in the maintained BSR of the UE plus a delay estimate between a moment at which a predetermined service arrives at a buffer of the UE and a moment at which the UE reports the BSR.

4. The method according to claim 3, wherein the delay estimate between the moment at which the predetermined service arrives at the buffer of the UE and the moment at which the UE reports the BSR is that:
the delay estimate is 0 when continuously scheduling; and
the delay estimate is a numerical value which is randomly generated within a closed interval [1, a scheduling request cycle] when non-continuously scheduling.

5. A device for estimating an uplink service waiting delay, provided in a base station, **characterized by** comprising:
a comparison module configured to compare a Buffer Status Report, BSR, reported by UE with a maintained BSR of the UE and determine a valid BSR; wherein the comparison module is configured to: compare the BSR reported by the UE this time with a sum of the maintained BSRs of the UE; when the BSR reported this time is less than or equal to the sum of the BSRs, determine that the BSR reported this time is invalid; and when the BSR reported this time is greater than the sum of the BSRs, determine that the BSR reported this time is valid, and determine the valid BSR to be equal to the BSR reported this time minus the sum of the maintained BSRs of the UE;
a maintenance module configured to, when the BSR reported by the UE contains a timestamp, update the maintained BSR of the UE to be the valid BSR according to the valid BSR and the timestamp; and when the BSR reported by the UE does not contain a timestamp, add a timestamp for the valid BSR, and update the maintained BSR of the UE to be the valid BSR according to the valid BSR and the added timestamp; and
a calculation module configured to, when the UE is scheduled by the base station, calculate a service waiting delay according to a timestamp of the maintained BSR of the UE.

6. The device according to claim 5, wherein:
the calculation module is further configured to, after the UE is scheduled by the base station, update the maintained BSR of the UE, including: modifying a size of a scheduled BSR, updating a sum of the maintained BSRs and remove a BSR which has already been scheduled.

7. The device according to claim 5, wherein the calculation module is configured to:
when the BSR reported by the UE contains a timestamp, calculate the service waiting delay to be an interval between a moment at which the UE is scheduled and an earliest moment represented by the timestamp in the maintained BSR of the UE; and when the BSR reported by the UE does not contain a timestamp, calculate the service waiting delay to be the interval between the moment at which the UE is scheduled and the earliest moment represented by the timestamp in the maintained BSR of the UE plus a delay estimate between a moment at which a predetermined service arrives at a buffer of the UE and a moment at which the UE reports the BSR.

8. The device according to claim 7, wherein the delay estimate between the moment at which the predetermined service arrives at the buffer of the UE and the moment at which the UE reports the BSR is that:
the delay estimate is 0 when continuously scheduling; and
the delay estimate is a numerical value which is randomly generated within a closed interval [1, a scheduling request cycle] when non-continuously scheduling.

9. A computer-readable storage medium, storing a computer program, wherein the computer program comprises program instructions which, when executed by a base station apparatus, enable the apparatus to execute the method according to any one of claims 1-4.

## Patentansprüche

1. Verfahren, das durch eine Vorrichtung ausgeführt wird, die in einer Basisstation angeordnet ist, zum Schätzen einer Uplink-Dienstwarteverzögerung, **dadurch gekennzeichnet, dass** es Folgendes umfasst:
die Basisstation vergleicht einer Puffer Status Report (BSR), der durch eine Endgerät-UE berichtet wird, mit einem verwalteten BSR der UE und bestimmt einen gültigen BSR, wobei der Vorgang, bei dem die Basisstation den durch die UE berichteten BSR mit dem verwalteten BSR der UE vergleicht und den gültigen BSR bestimmt, Folgendes umfasst: die Basisstation vergleicht den BSR, der dieses Mal durch die UE berichtet wurde, mit einer Summe der verwalteten BSRs der UE; wenn der dieses Mal berichtete BSR maximal so groß ist wie die Summe der BSRs, Bestimmen, dass der dieses Mal berichtete BSR ungültig ist; und wenn der dieses Mal berichtete BSR größer ist als die Summe der BSRs, Bestimmen, dass der dieses Mal berichtete BSR gültig ist, und Bestimmen, dass der gültige BSR gleich dem dieses Mal berichteten BSR, abzüglich der Summe der verwalteten BSRs der UE, ist;
wenn der durch die UE berichtete BSR einen Zeitstempel enthält, so aktualisiert die Basisstation den verwalteten BSR der UE, so dass er der gültige BSR ist, gemäß dem gültigen BSR und dem Zeitstempel; und wenn der durch die UE berichtete BSR keinen Zeitstempel enthält, so fügt sie einen Zeitstempel für den gültigen BSR hinzu und aktualisiert den verwalteten BSR der UE, so dass er der gültige BSR ist, gemäß dem gültigen BSR und dem hinzugefügten Zeitstempel; und
wenn die UE disponiert ist, so berechnet die Basisstation eine Dienstwarteverzögerung gemäß einem Zeitstempel der verwalteten BSR der UE.

2. Verfahren nach Anspruch 1, wobei das Verfahren des Weiteren Folgendes umfasst:
nachdem die UE disponiert wurde, aktualisiert die Basisstation den verwalteten BSR der UE, einschließlich: Modifizieren einer Größe eines disponierten BSR, Aktualisieren einer Summe der verwalteten BSRs, und Entfernen eines BSR, der bereits disponiert wurde.

3. Verfahren nach Anspruch 1, wobei das Berechnen der Dienstwarteverzögerung gemäß dem Zeitstempel des verwalteten BSR der UE Folgendes umfasst:
wenn der durch die UE berichtete BSR einen Zeitstempel enthält, so berechnet die Basisstation die Dienstwarteverzögerung als ein Intervall zwischen einem Moment, in dem die UE disponiert wird, und einem frühesten Moment, der durch den Zeitstempel in der verwalteten BSR der UE dargestellt wird; und
wenn der durch die UE berichtete BSR keinen Zeitstempel enthält, so berechnet die Basisstation die Dienstwarteverzögerung als das Intervall zwischen dem Moment, in dem die UE disponiert wird, und dem frühesten Moment, der durch den Zeitstempel in dem verwalteten BSR der UE dargestellt wird, zuzüglich einer Verzögerungsschätzung zwischen einem Moment, in dem ein zuvor festgelegter Dienst in einem Puffer der UE eintrifft, und einem Moment, in dem die UE den BSR berichtet.

4. Verfahren nach Anspruch 3, wobei die Verzögerungsschätzung zwischen dem Moment, in dem der zuvor festgelegte Dienst in dem Puffer der UE eintrifft, und dem Moment, in dem die UE den BSR berichtet, ist, dass:
die Verzögerungsschätzung 0 ist, wenn kontinuierlich disponiert wird; und
die Verzögerungsschätzung ein Zahlenwert ist, der nach dem Zufallsprinzip innerhalb eines geschlossen Intervalls [1, ein Disponierungsanforderungszyklus] generiert wird, wenn nicht-kontinuierlich disponiert wird.

5. Vorrichtung zum Schätzen einer Uplink-Dienstwarteverzögerung, die in einer Basisstation angeordnet ist, **dadurch gekennzeichnet, dass** sie Folgendes umfasst:
ein Vergleichsmodul, das dafür konfiguriert ist, einen durch die UE berichteten Puffer Status Report (BSR) mit einer verwalteten BSR der UE zu vergleichen und einen gültigen BSR zu bestimmen, wobei das Vergleichsmodul dafür konfiguriert ist, den dieses Mal durch die UE berichteten BSR mit einer Summe der verwalteten BSRs der UE zu vergleichen, wenn der dieses Mal berichtete BSR maximal so groß ist wie die Summe der BSRs, zu bestimmen, dass der dieses Mal berichtete BSR ungültig ist; und wenn der dieses Mal berichtete BSR größer ist als die Summe der BSRs, zu bestimmen, dass der dieses Mal berichtete BSR gültig ist, und zu bestimmen, dass der gültige BSR gleich dem dieses Mal berichteten BSR, abzüglich der Summe der verwalteten BSRs der UE, ist;
ein Verwaltungsmodul, das dafür konfiguriert ist, wenn der durch die UE berichtete BSR einen Zeitstempel enthält, den verwalteten BSR der UE gemäß dem gültigen BSR und dem Zeitstempel zu aktualisieren, so dass er der gültige BSR ist; und wenn der durch die UE berichtete BSR keinen Zeitstempel enthält, einen Zeitstempel für den gültigen BSR hinzuzufügen, und den verwalteten BSR der UE gemäß dem gültigen BSR und dem hinzugefügten Zeitstempel zu aktualisieren, so dass er der gültige BSR ist; und
ein Berechnungsmodul, das dafür konfiguriert ist, wenn die UE durch die Basisstation disponiert wurde, eine Dienstwarteverzögerung gemäß einem Zeitstempel des verwalteten BSR der UE zu berechnen.

6. Vorrichtung nach Anspruch 5, wobei:
das Berechnungsmodul des Weiteren dafür konfiguriert ist, nachdem die UE durch die Basisstation disponiert wurde, den verwalteten BSR der UE zu aktualisieren, einschließlich: Modifizieren einer Größe eines disponierten BSR, Aktualisieren einer Summe der verwalteten BSRs, und Entfernen eines BSR, der bereits disponiert wurde.

7. Vorrichtung nach Anspruch 5, wobei das Berechnungsmodul dafür konfiguriert ist:
wenn der durch die UE berichtete BSR einen Zeitstempel enthält, die Dienstwarteverzögerung als ein Intervall zwischen einem Moment, in dem die UE disponiert wird, und einem frühesten Moment, der durch den Zeitstempel in der verwalteten BSR der UE dargestellt wird, zu berechnen; und wenn der durch die UE berichtete BSR keinen Zeitstempel enthält, die Dienstwarteverzögerung als das Intervall zwischen dem Moment, in dem die UE disponiert wird, und dem frühesten Moment, der durch den Zeitstempel in dem verwalteten BSR der UE dargestellt wird, zuzüglich einer Verzögerungsschätzung zwischen einem Moment, in dem ein zuvor festgelegter Dienst in einem Puffer der UE eintrifft, und einem Moment, in dem die UE den BSR berichtet, zu berechnen.

8. Vorrichtung nach Anspruch 7, wobei die Verzögerungsschätzung zwischen dem Moment, in dem der zuvor festgelegte Dienst in dem Puffer der UE eintrifft, und dem Moment, in dem die UE den BSR berichtet, ist, dass:
die Verzögerungsschätzung 0 ist, wenn kontinuierlich disponiert wird; und
die Verzögerungsschätzung ein Zahlenwert ist, der nach dem Zufallsprinzip innerhalb eines geschlossen Intervalls [1, ein Disponierungsanforderungszyklus] generiert wird, wenn nicht-kontinuierlich disponiert wird.

9. Computerlesbares Speichermedium, auf dem ein Computerprogramm gespeichert ist, wobei das Computerprogramm Programminstruktionen umfasst, die, wenn sie durch eine Basisstationsvorrichtung ausgeführt werden, die Vorrichtung befähigen, das Verfahren nach einem der Ansprüche 1-4 auszuführen.

## Revendications

1. Procédé effectué par un dispositif prévu dans une station de base, destiné à estimer un temps d'attente de service de liaison montante, **caractérisé en ce qu'**il comprend :
la comparaison d'un rapport de statut de mémoire tampon, BSR, rapporté par un UE de terminal à un BSR maintenu de l'UE et la détermination d'un BSR valide par la station de base ; dans lequel la comparaison du BSR rapporté par l'UE au BSR maintenu de l'UE et la détermination du BSR valide par la station de base comprennent : la comparaison, par la station de base, du BSR rapporté par l'UE cette fois-ci à une somme des BSR maintenus de l'UE ; lorsque le BSR rapporté cette fois-ci est inférieur ou égal à la somme des BSR, la détermination que le BSR rapporté cette fois-ci est invalide ; et,
lorsque le BSR rapporté cette fois-ci est supérieur à la somme des BSR, la détermination que le BSR rapporté cette fois-ci est valide, et la détermination du BSR valide pour qu'il soit égal au BSR rapporté cette fois-ci moins la somme des BSR maintenus de l'UE ;
lorsque le BSR rapporté par l'UE contient un horodatage, la mise à jour, par la station de base, du BSR maintenu de l'UE pour qu'il soit le BSR valide en fonction du BSR valide et de l'horodatage ; et, lorsque le BSR rapporté par l'UE ne contient pas d'horodatage, l'ajout d'un horodatage pour le BSR valide, et la mise à jour du BSR maintenu de l'UE pour qu'il soit le BSR valide en fonction du BSR valide et de l'horodatage ajouté ; et
lorsque l'UE est programmé, le calcul, par la station de base, d'un temps d'attente de service en fonction d'un horodatage du BSR maintenu de l'UE.

2. Procédé selon la revendication 1, dans lequel le procédé comprend en outre :
après que l'UE est programmé, la mise à jour, par la station de base, du BSR maintenu de l'UE, comprenant : la modification d'une taille d'un BSR programmé, la mise à jour d'une somme des BSR maintenus et la suppression d'un BSR qui a déjà été programmé.

3. Procédé selon la revendication 1, dans lequel le calcul du temps d'attente de service en fonction de l'horodatage du BSR maintenu de l'UE comprend :
lorsque le BSR rapporté par l'UE contient un horodatage, le calcul, par la station de base, du temps d'attente de service pour qu'il soit un intervalle entre un moment auquel l'UE est programmé et un moment le plus tôt représenté par l'horodatage dans le BSR maintenu de l'UE ; et
lorsque le BSR rapporté par l'UE ne contient pas d'horodatage, le calcul, par la station de base, du temps d'attente de service pour qu'il soit l'intervalle entre le moment auquel l'UE est programmé et le moment le plus tôt représenté par l'horodatage dans le BSR maintenu de l'UE plus une estimation de retard entre un moment auquel un service prédéterminé arrive à une mémoire tampon de l'UE et un moment auquel l'UE rapporte le BSR.

4. Procédé selon la revendication 3, dans lequel l'estimation de retard entre le moment auquel le service prédéterminé arrive à la mémoire tampon de l'UE et le moment auquel l'UE rapporte le BSR est que :
l'estimation de retard est 0 lors d'une programmation continue ; et
l'estimation de retard est une valeur numérique qui est générée aléatoirement à l'intérieur d'un intervalle fermé [1, un cycle de demande de programmation] lors d'une programmation non continue.

5. Dispositif destiné à estimer un temps d'attente de service de liaison montante, prévu dans une station de base, **caractérisé en ce qu'**il comprend :
un module de comparaison configuré pour effectuer la comparaison d'un rapport de statut de mémoire tampon, BSR, rapporté par un UE à un BSR maintenu de l'UE et la détermination d'un BSR valide ; dans lequel le module de comparaison est configuré pour effectuer : la comparaison du BSR rapporté par l'UE cette fois-ci à une somme des BSR maintenus de l'UE ; lorsque le BSR rapporté cette fois-ci est inférieur ou égal à la somme des BSR, la détermination que le BSR rapporté cette fois-ci est invalide ; et, lorsque le BSR rapporté cette fois-ci est supérieur à la somme des BSR, la détermination que le BSR rapporté cette fois-ci est valide, et la détermination du BSR valide pour qu'il soit égal au BSR rapporté cette fois-ci moins la somme des BSR maintenus de l'UE ;
un module de maintenance configuré pour effectuer, lorsque le BSR rapporté par l'UE contient un horodatage, la mise à jour du BSR maintenu de l'UE pour qu'il soit le BSR valide en fonction du BSR valide et de l'horodatage ; et, lorsque le BSR rapporté par l'UE ne contient pas d'horodatage, l'ajout d'un horodatage pour le BSR valide, et la mise à jour du BSR maintenu de l'UE pour qu'il soit le BSR valide en fonction du BSR valide et de l'horodatage ajouté ; et
un module de calcul configuré pour effectuer, lorsque l'UE est programmé par la station de base, le calcul d'un temps d'attente de service en fonction d'un horodatage du BSR maintenu de l'UE.

6. Dispositif selon la revendication 5, dans lequel :
le module de calcul est en outre configuré pour effectuer, après que l'UE est programmé par la station de base, la mise à jour du BSR maintenu de l'UE, comprenant : la modification d'une taille d'un BSR programmé, la mise à jour d'une somme des BSR maintenus et la suppression d'un BSR qui a déjà été programmé.

7. Dispositif selon la revendication 5, dans lequel le module de calcul est configuré pour effectuer :
lorsque le BSR rapporté par l'UE contient un horodatage, le calcul du temps d'attente de service pour qu'il soit un intervalle entre un moment auquel l'UE est programmé et un moment le plus tôt représenté par l'horodatage dans le BSR maintenu de l'UE ; et lorsque le BSR rapporté par l'UE ne contient pas d'horodatage, le calcul du temps d'attente de service pour qu'il soit l'intervalle entre le moment auquel l'UE est programmé et le moment le plus tôt représenté par l'horodatage dans le BSR maintenu de l'UE plus une estimation de retard entre un moment auquel un service prédéterminé arrive à une mémoire tampon de l'UE et un moment auquel l'UE rapporte le BSR.

8. Dispositif selon la revendication 7, dans lequel l'estimation de retard entre le moment auquel le service prédéterminé arrive à la mémoire tampon de l'UE et le moment auquel l'UE rapporte le BSR est que :
l'estimation de retard est 0 lors d'une programmation continue ; et
l'estimation de retard est une valeur numérique qui est générée aléatoirement à l'intérieur d'un intervalle fermé [1, un cycle de demande de programmation] lors d'une programmation non continue.

9. Support de mémorisation lisible par ordinateur, mémorisant un programme informatique, dans lequel le programme informatique comprend des instructions de programme qui, lorsqu'elles sont exécutées par un appareil de station de base, permettent à l'appareil d'exécuter le procédé selon l'une quelconque des revendications 1 à 4.
